# FASCICULE DE BREVET EUROPEEN

(11) **EP 0 349 447 B1**
(45) Date de publication et mention de la délivrance du brevet: **12.05.1993**
(21) Numéro de dépôt: 89420229.0
(22) Date de dépôt: 27.06.1989
(51) Int. Cl.: H02P 6/02, H02P 8/00

(54) **Circuit de commande en mode pas à pas ou en mode autocommute d'un moteur**
Regelschaltung eines Motors im Schrittschaltmodus oder im selbstkommentierenden Modus
Motor control circuit with a step or self-commutation mode

(30) Priorité: 30.06.1988 FR 8809364
(43) Date de publication de la demande: 03.01.1990
(73) Titulaire: MONETEL, F-07500 Granges les Valence (FR)
(72) Inventeur: Alaux, Bernard, F-26000 Valence (FR); Fivel, Patrice, F-26500 Bourg les Valence (FR)
(74) Mandataire: de Beaumont, Michel

(56) Documents cités:
- EP-A- 0 066 159
- EP-A- 0 189 732
- EP-A- 0 216 733
- DE-A- 3 543 047
- US-A- 4 028 605
- US-A- 4 246 518
- US-A- 4 692 674

## Description

La présente invention concerne le domaine de la commande de moteurs électriques.

Dans certaines applications, on souhaite faire fonctionner un moteur tantôt comme moteur pas à pas tantôt comme moteur régulé à vitesse constante.

Généralement, ce problème étant difficilement soluble, on a utilisé pour ce type d'application deux moteurs, l'un étant commandé en pas à pas, l'autre à vitesse constante, ces moteurs étant embrayés tour à tour.

Ces dernières années, on a vu apparaître des moteurs qui se prêtent bien à fonctionner ou bien en mode pas à pas ou bien en mode normal. Comme exemple d'un tel moteur, on peut citer les moteurs du type à aimant disque et à codeur angulaire intégré tel que celui fabriqué par la société Portescap (France, s.a.) sous la référence PP520.

Le document EP-A- 189 732 décrit un dispositif d'entraînement d'un moteur pouvant fonctionner soit en mode pas à pas, soit en mode auto-commuté.

Ces moteurs se prêtent effectivement au fonctionnement dans l'un ou l'autre mode mais, dans les schémas d'application connus, on utilise des circuits distincts pour réaliser chacune des deux fonctions de commande.

La présente invention a pour objet la commande alternée d'un moteur tel que du type à aimant disque et codeurs angulaires intégrés, en mode pas à pas et en mode continu, le fonctionnement en mode continu étant régulé en vitesse, en utilisant un circuit électronique unique pour la commande de ces deux modes.

Plus particulièrement, la présente invention vise à prévoir un tel circuit de commande qui soit particulièrement simple et utilise un minimum de circuits intégrés, ces circuits intégrés étant utilisés en commun pour les deux fonctions.

Pour atteindre ces objets, la présente invention prévoit un circuit de commande en mode pas à pas ou en mode auto-commuté, avec régulation de vitesse, d'un moteur du type à aimant disque et à codeurs angulaires, prévu pour être alimenté par deux phases de signal de commande. La commande en mode pas à pas est assurée par un ensemble de deux circuits intégrés, le premier circuit intégré recevant des signaux d'horloge pas à pas et délivrant les deux phases de signal de commande au deuxième circuit intégré servant d'amplificateur de puissance, le premier circuit intégré comprenant également des moyens pour appliquer des signaux de validation intermittents au deuxième circuit intégré quand il reçoit sur une entrée dite de sécurité un signal indiquant que le courant dans une au moins des phases est supérieur à un seuil déterminé. La commande dans le mode auto-commuté est fournie par un réseau logique programmable à partir des sorties des codeurs angulaires. Le même deuxième circuit intégré est utilisé pour l'amplification des signaux de commande dans le mode auto-commuté et le même premier circuit intégré est utilisé pour la régulation de vitesse dans le mode auto-commuté, ce premier circuit intégré recevant alors sur son entrée de sécurité le signal résultant de la conversion fréquence/tension de la sortie de l'un des codeurs angulaires.

La présente invention prévoit aussi l'application du circuit de commande mentionné dans le paragraphe précédent à la commande d'un moteur utilisé dans un système de lecture magnétique et d'impression de tickets.

Ces objets, caractéristiques et avantages ainsi que d'autres de la présente invention seront exposés plus en détail dans la description suivante d'un mode de réalisation particulier faite en relation avec les figures jointes parmi lesquelles :
la figure 1 représente une commande de moteur en mode pas à pas ;
la figure 2 représente une commande mixte, pas à pas ou continue régulée, selon la présente invention ;
la figure 3 représente des formes d'ondes destinées à illustrer le fonctionnement du circuit de la figure 2 ; et
la figure 4 illustre un exemple d'application d'un moteur à commande mixte selon la présente invention.

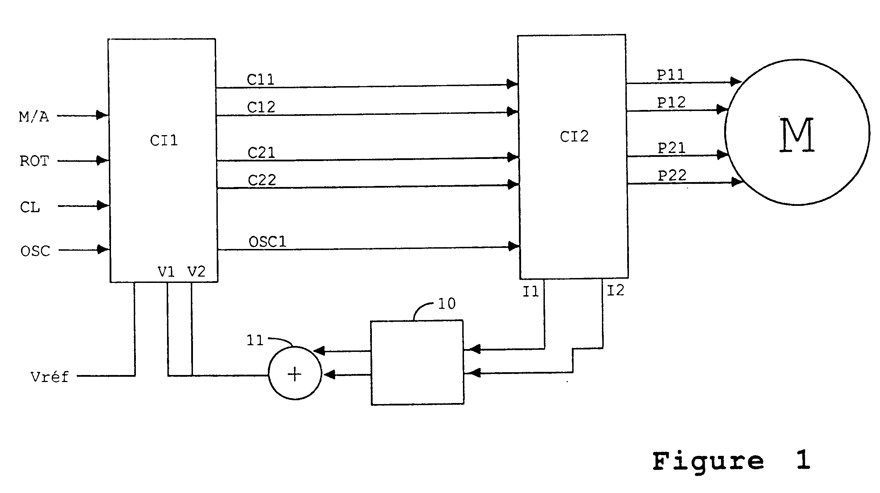

La figure 1 représente un moteur M alimenté par un circuit de commande en mode pas à pas. Ce moteur reçoit des signaux sur deux enroulements, à savoir un signal de phase 1 entre des conducteurs P11 et P12 et un signal de phase 2 entre des conducteurs P21 et P22. Classiquement, cette commande est réalisée à l'aide de deux circuits intégrés commercialement disponibles, à savoir un premier circuit intégré CI1 de commande tel que le circuit L297 de la société SGS et un deuxième circuit intégré CI2 d'amplification tel que le circuit L298 également fabriqué par la société SGS.

Le circuit de commande CI1 reçoit un signal d'ordre de marche/arrêt M/A, un signal de commande de sens de rotation ROT, un signal d'horloge CL fournissant les impulsions de commande pas à pas, et un signal OSC en provenance d'un oscillateur fonctionnant à une fréquence élevée devant la fréquence du moteur. Ce circuit CI1 fournit pour la commande de la phase 1 un signal sur des lignes C11 et C12 et pour la commande de la phase 2 un signal sur des lignes C21 et C22.

En outre, le circuit intégré CI2 du type susmentionné comprend des sorties I1 et I2 représentant les courants dans la phase 1 et dans la phase 2. Ces sorties sont appliquées à un convertisseur courant/tension 10 et le circuit intégré CI1 comprend des entrées V1 et V2 correspondantes permettant de comparer les tensions V1 et V2 résultant de la transformation en tension des courants I1 et I2 à une tension de référence VREF. Dans le schéma de la figure 1, on a additionné les tensions V1 et V2 dans un additionneur 11 et les bornes d'entrée V1 et V2 du circuit CI1 sont interconnectées. Le circuit intégré CI1 compare la somme des tensions V1 et V2 à une tension de référence VREF et, si cette somme est supérieure à la tension VREF, le circuit CI1 fournit au circuit CI2 un signal 0SC1 résultant de la commande par le signal OSC pour laisser passer les signaux de sortie seulement pendant les phases de signal à haut niveau de l'oscillateur, hachant ainsi ces signaux et réduisant la puissance électrique disponible pour le moteur. Ainsi, la comparaison de V1 + V2 à VREF constitue une protection contre les surintensités au cas où les courants I1 et I2 dépassent une valeur prédéterminée. Il faut toutefois noter qu'en temps normal, quand le circuit fonctionne sans incident, les valeurs V1 et V2 sont voisines de zéro et la boucle de sécurité ne fournit aucun signal.

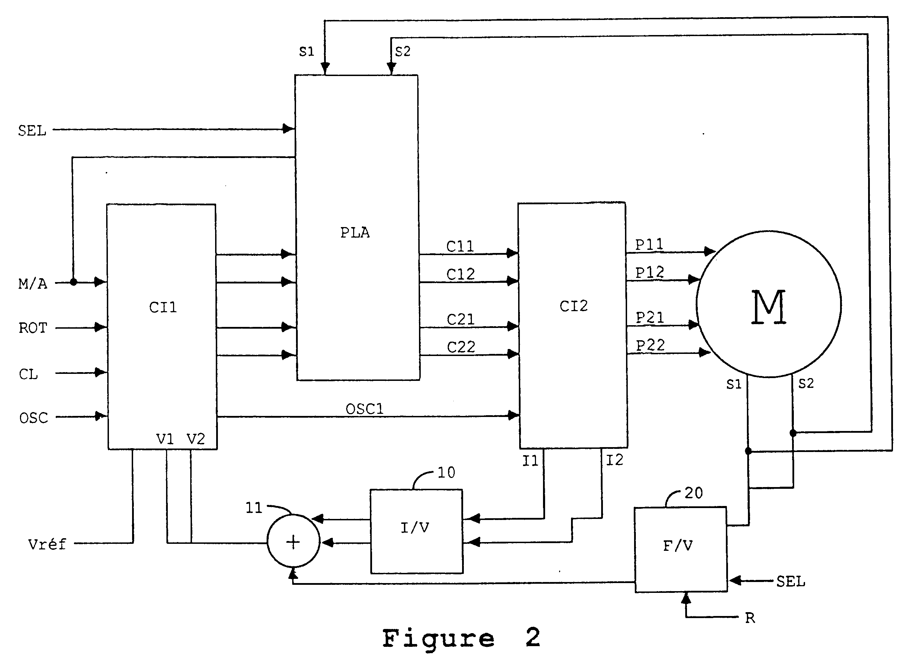

La figure 2 représente un mode de réalisation de circuit de commande mixte selon la présente invention. On y retrouve le moteur M, les circuits intégrés CI1, CI2 et la boucle de sécurité comprenant les éléments 10 et 11. Le moteur est un moteur à aimant disque à codeurs angulaires intégrés fournissant des signaux S1 et S2 qui sont des créneaux correspondant à la vitesse de rotation du moteur (un certain nombre de créneaux par rotation). Classiquement, un tel moteur est commandé en fournissant à partir des signaux S1 et S2, par un circuit combinatoire PLA, les signaux C11-C12 et C21-C22 destinés, après amplification par un amplificateur qui peut être le circuit CI2 susmentionné, à fournir les signaux P11-P12 et P21-P22 de commande des deux phases du moteur. De façon classique, le circuit PLA reçoit le signal d'ordre de sens de rotation ROT pour déterminer la façon dont seront dérivés les signaux C11-C12 et C21-C22 à partir des signaux S1 et S2 pour fournir le sens de rotation approprié au moteur.

Selon la présente invention, il est prévu de réguler la vitesse du moteur M en utilisant le circuit intégré CI1. Ainsi, l'un des signaux S1 ou S2 des codeurs du moteur est envoyé à un circuit convertis seur fréquence/tension 20 qui applique sa sortie à l'additionneur 11 vers les entrées reliées entre elles V1 et V2 susmentionées. Ainsi, quand la vitesse du moteur varie en dessus ou en dessous d'une valeur de consigne, la somme V1 + V2 devient supérieure ou inférieure à la tension de référence et le signal de sortie OSC1 agit sur le circuit intégré CI2 pour réguler la vitesse. Le circuit 20 reçoit un signal de réglage R et un signal de sélection SEL pour être activé seulement quand on veut être dans le mode de fonctionnement continu (ou auto-commuté) De même, le circuit PLA est commandé par le signal SEL pour, dans le mode auto-commuté, fournir les signaux appropriés au circuit intégré CI2 à partir des signaux S1 et S2 et, dans le mode pas à pas, transmettre directement les sorties du circuit intégré CI1.

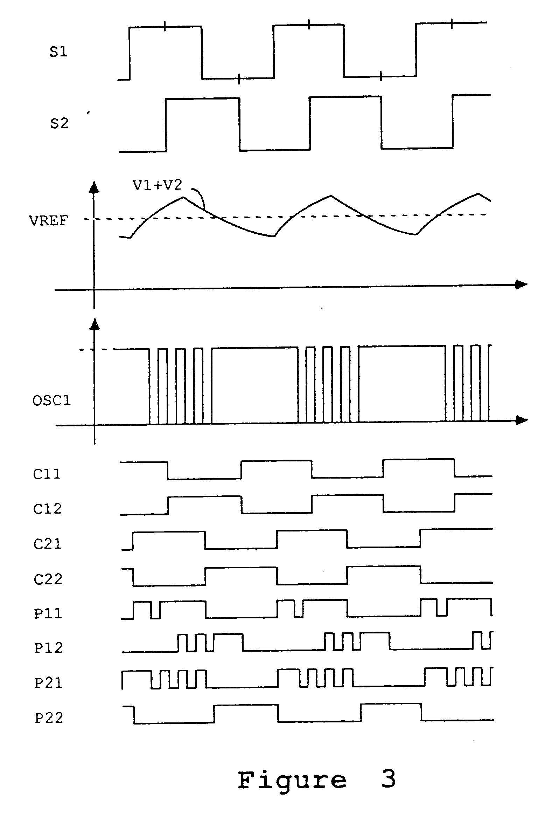

La figure 3 représente des formes d'onde apparaissant en différents points du circuit de la figure 2 pour mieux faire comprendre le fonctionnement de ce circuit. On suppose dans cette figure que le moteur M est dans un état de fonctionnement auto-commuté régulé.

Les signaux S1 et S2 des capteurs intégrés au moteur M, par exemple des capteurs à effet Hall, ont l'allure de créneaux à rapport cyclique 0,5, ces créneaux étant déphasés les uns par rapport aux autres de π/2 en avance ou en retard selon le sens de rotation du moteur. Dans l'exemple donné, le signal S2 est en retard de π/2 par rapport à S1.

Le signal V1 + V2 de sortie du convertisseur fréquence/tension (F/V) 20, dérivé du signal S1 dans l'exemple représenté, est un signal en dents de scie, le front montant du signal S1 correspond au début du signal V1 + V2. On a représenté le fonctionnement l'état régulé, c'est-à-dire que la tension VREF correspond à une valeur intermédiaire entre les valeurs minimale et maximale du signal V1 + V2. On notera d'ailleurs que l'amplitude de ce signal V1 + V2 est réglée par une entrée R vers le convertisseur 20.

Le signal de régulation 0SC1 provenant du circuit intégré CI1 est un signal à haut niveau quand V1 + V2 est inférieur à VREF et un signal de fréquence correspondant à celle du signal de l'oscillateur OSC quand V1 + V2 est supérieur à VREF.

On a représenté à titre d'exemple les signaux C11 et C12 de commande de phase 1 et C21 et C22 de commande de phase 2 du moteur en sortie du circuit PLA. Il s'agit de signaux en opposition de phase sur les deux conducteurs d'une même phase et déphasés de π/2 d'une phase à l'autre.

Le signal 0SC1 arrivant sur le circuit intégré CI2 détermine que les signaux de sortie P11, P12, P21 et P22 correspondent au passage de ces signaux C11 à C22 par des portes ET dont l'autre entrée correspond au signal OSC1. On obtient ainsi les signaux P11 à P22 représentés. En conséquence, si l'amplitude de V1 + V2 tend à augmenter, le hachage des signaux P11 à P22 augmente et, inversement, il diminue si le signal V1 + V2 tend à décroître. On s'assure ainsi que le moteur M tourne à vitesse constante.

On notera que c'est une caractéristique de la présente invention que d'utiliser le circuit intégré CI1 et la fonction de sécurité généralement associée aux circuits intégrés CI1 et CI2 pour assurer la régulation de vitesse du moteur en mode auto-commuté. En outre, comme le montre la figure 2, même dans le mode de régulation, on peut continuer à utiliser la fonction de sécurité assurée par le convertisseur courant/tension 10 pour réduire la puissance appliquée au moteur en cas d'incident, c'est-à-dire de surintensité sur une phase.

Une commande de moteur selon la présente invention peut notamment être appliquée dans le cas d'un dispositif valideur de tickets. Il s'agit là par exemple d'un appareil fixe ou embarqué, par exemple dans un autobus, et destiné au contrôle de titres de transport à piste magnétique.

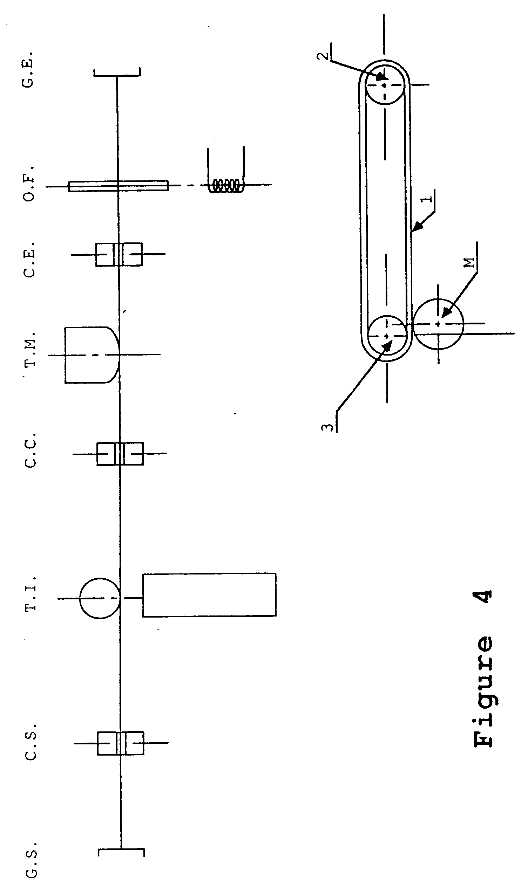

Un exemple schématique d'un tel appareil est illustré en figure 4.

L'usager introduit son ticket ou titre de transport dans un guichet d'entrée GE. Le titre est déplacé par une bande transporteuse 1 tournant autour de rouleaux 2 et 3 et entraînée par le moteur M susmentionné.

Le titre est détecté par un capteur d'entrée CE et avalé dans le valideur. Un obturateur de fente OF est alors actionné par un électro-aimant interdisant toute nouvelle introduction durant le traitement du titre présent à l'intérieur de l'appareil. Le titre est ensuite acheminé devant une tête magnétique TM pour lecture des informations codées sous forme numérique sur la piste magnétique. Le traitement de ces informations est effectué (vérification de la validité, décrémentation de la valeur résiduelle etc.) puis le déplacement de la bande transporteuse est inversé pour amener à nouveau le titre sous la tête magnétique TM afin d'effectuer le codage de nouvelles informations. La synchronisation est assurée par le capteur de codage CC. Le déplacement est alors inversé à nouveau dans le but de relire les informations que l'on vient de coder (vérification du codage). Après ces opérations, on achemine le titre vers un système d'impression TI, par exemple un système d'impression à impact.

Dans tous les déplacements précédents, notamment pour la lecture magnétique, le moteur devait fonctionner à vitesse constante dans un sens ou dans l'autre. Ensuite, il doit être arrêté et avancé pas à pas pour permettre l'impression transversale d'une succession de lignes, de ponts ou de caractères.

Enfin, le titre est acheminé vers un guichet de sortie GS où l'usager peut le récupérer. Le capteur de sortie CS permet de surveiller le retrait du titre. On déverrouille alors l'obturateur de fente d'entrée et on attend l'introduction d'un nouveau titre.

On voit que dans un tel système où l'on a besoin d'une combinaison de déplacements continus à vitesse constante et pas à pas, le système de commande selon la présente invention est tout particulièrement adapté.

Bien entendu, la présente invention est susceptible de nombreuses variantes et modifications dans le cadre de la protection définie par les revendications. Notamment, on a indiqué précédemment des références de moteurs et de circuits intégrés spécifiques. D'autres moteurs et circuits intégrés fournissant des fonctions équivalentes pourraient être utilisés.

## Revendications

1. Circuit de commande en mode pas à pas ou en mode auto-commuté, avec régulation de vitesse, d'un moteur (M) du type à aimant disque et à codeurs angulaires, prévu pour être alimenté par deux phases (P11-P12, P21-P22) de signal de commande, dans lequel la commande en mode pas à pas est assurée par un ensemble de deux circuits intégrés, le premier circuit intégré (CI1) recevant des signaux d'horloge pas à pas et délivrant les deux phases de signal de commande au deuxième circuit intégré (CI2) servant d'amplificateur de puissance, le premier circuit intégré comprenant également des moyens pour appliquer des signaux de validation intermittents au deuxième circuit intégré quand il reçoit sur une entrée dite de sécurité (V1, V2) un signal indiquant que le courant dans une au moins des phases est supérieur à un seuil déterminé (VREF), et dans lequel la commande dans le mode auto-commuté est fournie par un réseau logique programmable (PLA) à partir des sorties (S1, S2) des codeurs angulaires,
caractérisé en ce que le même deuxième circuit intégré (CI2) est utilisé pour l'amplification des signaux de commande dans le mode auto-commuté et en ce que le même premier circuit intégré (CI1) est utilisé pour la régulation de vitesse dans le mode auto-commuté, ce premier circuit intégré recevant alors sur ladite entrée de sécurité le signal résultant de la conversion fréquence/tension de la sortie de l'un des codeurs angulaires.

2. Application du circuit selon la revendication 1 à la commande d'un moteur utilisé dans un système de lecture magnétique et d'impression de tickets.

## Patentansprüche

1. Regelschaltung für einen Motor (M) im Schrittschaltmodus oder im Selbstführungsmodus mit Geschwindigkeitsregelung, wobei der Motor (M) vom Magnetscheibentyp mit Winkelcodierungen ist und ausgelegt ist, um durch zwei Phasen (P11-P12, P 21-P22) eines Steuersignales gespeist zu werden, wobei die Steuerung im Schrittschaltmodus durch eine Anordnung von zwei integrierten Schaltungen gewährleistet wird, bei denen die erste integrierte Schaltung (CI1) Taktsignale empfängt und die beiden Phasen des Steuersignales an die zweite integrierte Schaltung (CI2) liefert, die als Leistungsverstärker dient, wobei die erste integrierte Schaltung ebenfalls Einrichtungen aufweist, um intermittierende Bestätigungssignale an die zweite integrierte Schaltung zu liefern, wenn sie über einen sog.
Sicherungseingang (V1, V2) ein Signal empfängt, welches angibt, daß der Strom in mindestens einer der Phasen größer als eine vorbestimmte Schwelle (VREF) ist, und wobei die Steuerung in dem Selbstführungsmodus durch ein logisches Netzwerk (PLA) erfolgt, das mit Hilfe der Ausgänge (S1, S2) der Winkelcodierungen programmierbar ist,
**dadurch gekennzeichnet**, daß die zweite integrierte Schaltung (CI2) auch für die Verstärkung von Steuersignalen im Selbstführungsmodus verwendet wird, und daß die erste integrierte Schaltung (CI1) auch für die Geschwindigkeitsregelung in dem Selbstführungsmodus verwendet wird, wobei die erste integrierte Schaltung über den sogenannten Sicherungseingang das Signal empfängt, welches aus der Frequenz/Spannungs-Wandlung des Ausganges einer der Winkelcodierungen resultiert.

2. Anwendung der Schaltung nach Anspruch 1 bei der Steuerung eines Motors, der in einem Magnetlesesystem und Drucksystem für Fahrscheine verwendet wird.

## Claims

1. A circuit for controlling a motor in a stepping mode or a self-switching with speed regulation mode, said motor (M) being of the disk-shaped magnet and angle encoder type, designed to be fed by two phases (P11-P12, P21-P22) of a control signal, wherein the stepping mode control is ensured by a set of two integrated circuits, the first integrated circuit (CI1) receiving stepping clock signals and supplying the two phases of the control signal to a second driver integrated circuit (CI2), the first integrated circuit also comprising means for applying intermittent enabling signals to the second integrated circuit when it receives on a so-called security input (V1, V2) a signal indicating that the current in one at least of the phases is higher than a determined threshold (VREF), and wherein the control in the self-switching mode is supplied by a programmable logic array (PLA) from the outputs (S1, S2) of the angle encoders,
characterized in that the same second integrated circuit (CI2) is used for amplifying the control signals in the self-switching mode and wherein the same first integrated circuit (CI1) is used for regulating the speed in the self-switching mode, said first integrated circuit then receiving on said security input the signal resulting from the frequency/voltage conversion of the output of one of the angle encoders.

2. Application of the circuit according to claim 1 to the control of a motor used in a magnetic reading and printing system for tickets.
